Europäisches Patentamt

European Patent Office

Office européen des brevets

(19)

(11) Publication number: **0 253 274**
A2

(12) **EUROPEAN PATENT APPLICATION**

(21) Application number: **87109756.4**

(22) Date of filing: **07.07.87**

(51) Int. Cl.⁴: **G 01 N 27/90**

(30) Priority: **15.07.86 SE 8603113**

(43) Date of publication of application: **20.01.88**
**Bulletin 88/3**

(84) Designated Contracting States: **BE DE FR GB IT**

(71) Applicant: **TÖRNBLOMS KVALITETSKONTROLL AB,**
**Vikhus Rytterne, S-725 92 Västeras (SE)**

(72) Inventor: **Törnblom, Bengt Hjalmar, Vikhus Rytterne,**
**S-72590 Västeras (SE)**

(74) Representative: **Boecker, Joachim, Dr.-Ing.,**
**Rathenauplatz 2-8, D-6000 Frankfurt a.M. 1 (DE)**

(54) **Device utilizing eddy current technique for measuring and/or supervision.**

(57) Device utilizing eddy current technique for measuring and/or supervision of test objects, such as billets, with respect to, for example, surface cracks, comprising at least one transducer/sensor, which moves over the surface of the test object. According to the invention the device suppresses, completely or partially, harmless surface deformations, such as oscillation marks, by compensating the sensitivity characteristic, in the direction of movement of the transducer/sensor, with the respect to the surface deformation. The device includes a transducer/sensor with at least two coils (6, 7) of different dimension and/or shapes and appropriate processing of signals with different carrier frequencies from the two different coils or transducers (Figure 6).

Törnbloms Kvallitetskontroll AB
S-725 90 Västeras / Sweden

Device utilizing eddy current technique for measuring and/or
supervision

The invention relates to a device utilizing eddy current
technique for measuring and/or supervision according to the
precharacterising part of Claim 1.

In the field of eddy current testing the development proceeds towards a more extensive use of several carrier frequencies in order to overcome different types of problems,
for example the suppression of the "lift-off" dependence and
the like. One considerably limiting factor in crack detection - nowadays as well as earlier - is, however, that harmless surface defects, i.e. defects which are not detrimental
to the subsequent process steps, give rise to unwarranted
fault signals since the system is incapable of distinguishing these harmless surface defects from the detrimental surface cracks.

In crack detection on hot continuously cast billets, so-
called oscillation marks, for example, cause considerable
problems in conventional testing. SE-A-7507857-6, SE-A-
8302738-3, SE-A-8400698.0 (corresponding to EP-A-85101296.3)
and SE-A-8400861-4 (corresponding to EP-A-85101525.5) describe methods and devices which may be regarded as part solutions to this problem.

The reason for the previously experienced difficulties is
primarily based on the unwanted effects caused by the different depth of current penetration of different carrier

frequencies adjacent to oscillation marks and the like, because of the variation in the intensity of inductive coupling between the transducer and the test object arising in that connection, as a function of the position of the transducer.

The existing specialist literature - as far as is known - does not describe any method nor mention any means which determines the cause of the current problems, or how they can be overcome and solved.

The invention aims at devising a device of the above-mentioned kind that enables effectively to suppress the influence of the oscillation marks during crack detection.

To achieve this aim the invention suggests a device utilizing eddy current technique for measuring and/or supervision according to the introductory part of Claim 1, which is characterized by the features of the characterizing part of Claim 1.

Further developments of the invention are characterized by the features of the additional claims.

With the present invention in combination with the part solutions mentioned above, a possibility is provided of efficiently suppressing the influence of the oscillation marks on the crack detection. The invention operates efficiently as a separate device, and together with, for example, the teachings of the above-mentioned SE-A-8400861-4 or SE-A-8400698-0, thus providing an almost complete solution.

It should be pointed out in this connection that one reason for the problem having become simple to analyze and explain is the introduction of the imaginary sum currents described in the above-mentioned SE-A-8400861-4 and SE-A-8400698-0. It also forms the basis of the explanation of the present invention.

Since all conventional eddy current transducers with a central hole in the transducer coil normally suffer from the deficiencies mentioned above, the present invention results in a marked improvement of the theoretical limit to the minimum size of cracks that are detectable in relation to the level of occurrence of oscillation marks and the like, compared with conventional technique.

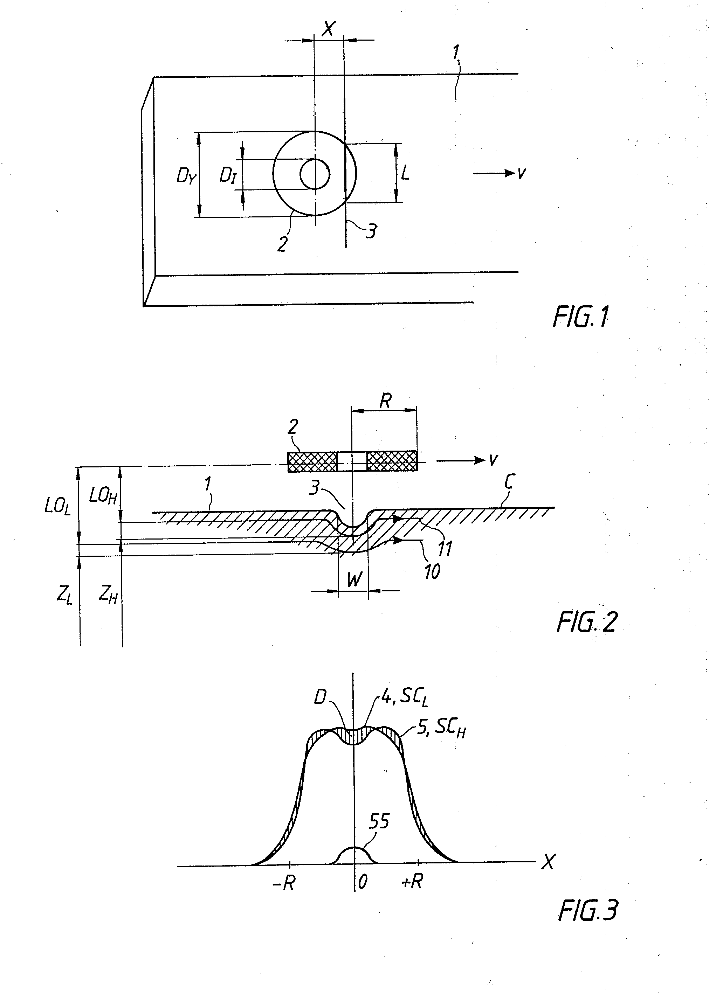

SE-A-8400698-0 and SE-A-8400861-4 describe methods and means by which the vector transformation and the like can be made to be optimal over the lift-off operating range by carrying out the transformation as a function of the LO distance. These documents also describe how to compensate for the various frequency-dependent penetration depths of the sum currents by a special embodiment of the transducer. Common to these methods is that they are primarily effective in suppressing undesired effects caused by a varying lift-off in combination with the varying depths of penetration for different carrier frequencies. In other words, variations in height (perpendicular to the surface) can be suppressed. However, the inductive coupling between the transducer and the surface area of the test object is also dependent - besides on the distance (LO) between surface and transducer - on the length (L) (see Figure 1) of the surface current path covered by the transducer coil in the transverse direction (parallel to the surface). Therefore, the present invention, which also permits suppression of harmless surface defects with a longitudinal/transverse extension, is to be considered an important complement to the afore-mentioned patent applications, by means of which a more three-dimensional possibility of suppression is obtained. Taken together, these inventions permit, for example, an efficient suppression of undesired influences on the measurement result by oscillation marks and the like in connection with crack detection.

In somewhat simplified terms the invention will be described in the following. It should be pointed out, however, that the drawings and their description are to be considered one

-4-

of many feasible alternatives or examples of how the invention can be realized. The drawings do not claim to be accurate as far as scales and dimensions are concerned but are to be regarded as examples illustrating merely the principle of the invention.

To make the description more easily comprehensible, mathematical derivations have been replaced by relevant - in some cases approximate - reasonings which, despite of their simplicity, are well founded both in theory and in practice. For the same reason, both the description and the drawings have been based on the use of two carrier frequencies only, meaning that the transducer is supplied with current or voltage of two frequencies. However, the invention can of course comprise the use more than two frequencies or complexes of frequencies.

The accompanying drawings show in

Figure 1 a test object under measuring with an eddy current detection device contemplated perpendicular to the surface to be inspected,

Figure 2 a section through the arrangement in Figure 1 perpendicular to the surface,

Figure 3 sensitivity characteristics for different frequencies and different embodiments of detection devices,

Figure 4 an embodiment of a coil configuration for a device according to the invention,

Figure 5 a alternative arrangement of the coils configuration for a device according to the invention,

Figure 6 a block diagram of an embodiment of a signal processing circuit used for the device according to the invention.

Figure 1 shows a test object, for example a billet 1, containing an oscillation mark 3 (hereinafter abbreviated "oscm"). A conventional circular surface transducer 2, the coil of which has an external diameter $D_Y$ and an internal diameter $D_I$, moves over the surface of the billet 1 at the speed v m/s.

The way Figure 1 is drawn, the transducer coil winding covers the length L of the oscm. This length L, of course, varies as the transducer coil moves across the oscm, L thus being a function of X in Figure 1. For reasons which are easily understood, the inductive coupling between the coil winding and the surface layer of the billet is greatest directly below the coil.

Since in practice, the oscm almost invariably has an extension across the billet, and its width W is small in relation to the external diameter $D_Y$ of the coil 2, the change/disturbance of the magnetic fields that is caused by the oscm will approximately be proportional to the length L. This means that the impedance of the coil 2 varies in a manner similar to that in which L varies as the coil 2 passes over the oscm. Since the coil 2 has a hole or core in its centre, which is apparently the case with all known transducer coils, L as a function of X will be similar to curve 5 in Figure 3, which is an important statement. The dip on the peak of the curves in Figure 3 is therefore - to anticipate the reasoning somewhat - a consequence of the internal hole with the diameter $D_I$.

The extended shape of the oscm, and the simplicity of showing L as a function of X, facilitates the understanding of the principle behind the invention. In general terms, however, for all uncompensated coils the rule applies that they always have sensitivity characteristic functions at different carrier frequencies which is exhibited by the difference D between the curves 4 and 5 in Figure 3.

Figure 2 shows largely the same as Figure 1 but in the plane of a vertical section. The sum currents 10 and 11 shown are the same imaginary currents as are shown in Figures 1 and 2 of the SE-A-8400861-4 and in Figure 1 of the SE-A-8400698-0.

Figure 3 shows the sensitivity characteristic (hereinafter abbreviated "SC") of the transducer/sensor 2 for a certain type of surface deformation, in this case an oscm. Thus, SC is the sensitivity curve/function displayed by the transducer/sensor 2 in the case of an oscm, as a function of X, at a certain LO-distance. X=0 has been defined as the position where the transducer 2 is situated exactly above the oscm.

Because currents of different frequencies are influenced somewhat differently by an oscm, two SC's are obtained, one for each respective carrier frequency, which is clear from Figure 3 in which reference numeral 4 shows the $SC_L$ for a low carrier frequency and reference numeral 5 shows the $SC_H$ for a high carrier frequency. When the oscm 3 passes under the transducer coil 2, the sum of the high frequency current 11 and the low frequency current 10, respectively, will be forced down by $Z_H$ and $Z_L$, respectively, of the oscm, as is shown simplified in Figure 2.

As is also clear from Figure 2, $Z_H/LO_H > Z_L/LO_L$, which means that the impedance change caused by the oscm in the transducer coil 2 is greater, relatively seen, for the high frequency than for the low frequency. This is one of the reasons for the dip on the top of the $SC_L$-curve being less prominent than the corresponding dip of the $SC_H$-curve. The result of this is that the oscm will have different SC-curves/functions for different carrier frequencies. The consequence of this, in turn, is that a difference D is obtained, which is illustrated by the hatched area in Figure 3. Depending on the shape of the coil etc., this difference D may contain primarily second and third harmonics but in certain cases also harmonics of a higher order.

Both the difference D per se and its harmonic content are greatly disturbing for all types of signal processing, for example transformation, in which at least two carrier frequencies are used, since crack detection is normally based on some type of difference measurement between the frequencies. An example of such a difference measurement is given in the above-mentioned SE-B-7507857-6. The difference D can here be directly or indirectly construed as a crack, which of course is a considerable disadvantage.

By imparting to different parts of the transducer/sensor different sensitivities in the direction of movement of the transducer/sensor, depending on (as a function of) the carrier frequency in question, and thus compensate/balance away the difference D, a so-called sensitivity characteristic compensation (hereinafter abbreviated "SCC") is obtained. It should be mentioned that the SC-functions, including the SCC-function, may comprise more than the actual transducer/sensor and its windings. Thus, the SC-function may also, for example, comprise - completely or partially - the rest of the device.

The invention suggests both a method and a device for limiting, completely or partially, the effects on the result of the crack detection caused by the difference D and/or its harmonic/frequency contents. Both the SC-functions for harmless surface deformations and the difference between different SC-functions of different frequency origins, when using at least two carrier frequencies, are novel both as regards the definition and as regards the possibilities of understanding and remedying the undesired effects caused by different depths of current penetration. This is the reason why the invention can be considered to be characterized by the device as described below.

The device according to the invention enables to suppress, completely or partially, the harmless surface deformations, such as oscillation marks and the like, by making the sensitivity characteristic (SC) for the surface deformation in question largely identical or similar for at least two different carrier frequencies and/or complexes of carrier frequencies. The SC-functions, which are largely similar for the carrier frequencies or complexes of carrier frequencies in question, may be obtained, completely or partially, by processing, for example amplifying, signals from at least one part of the transducer/sensor or the transducer/sensor arrangement, as a function of the carrier frequency in question. Thus, an SC-function can be formed, for example, by attenuating or amplifying signals of a certain frequency from a limited part of the transducer, which signals are then, for example, added to the other signals from the transducer of the same frequency origin. Characteristic may also be that the SC-functions, which are largely the same or similar for the carrier frequencies occurring at a particular time, are obtained, completely or partially, by supplying parts of or a part of the transducer/sensor, having different surface coverage, completely or partially with different carrier frequencies or carrier frequency components.

Another characteristic feature may be that at least one transducer/sensor includes at least two coils/windings/loops of different dimensions and/or shapes. By making, for example, a part of the transducer/sensor adjustable relative to the rest of the arrangement, the optimum SC-function for the surface deformation in question can be tested in a simple manner. As an example, a small coil can be screwed out of or into a larger coil in order thus to optimize the SC-function. Another way of achieving a suitable SC-function is to form the coil so as to exhibit, per se, a suitable characteristic, which normally presupposes a non-square or rectangular shape of the winding cross-section. By making the ratio $D_Y/D_I$ great, for example greater than 5, the dip on the SC-curve is reduced, which may in certain cases be sufficient.

If it is desired to obtain maximum performance, it may be suitable to minimize the difference D in Figure 3 further, in addition to what can be carried out on the transducer part. This can be done, for example, by processing, for example shaping, signals originating from completely or partially different carrier frequencies, for example rectified carrier frequency signals, differently <u>prior to</u> the transformation and the like, since in that case the transformation is not disturbed.

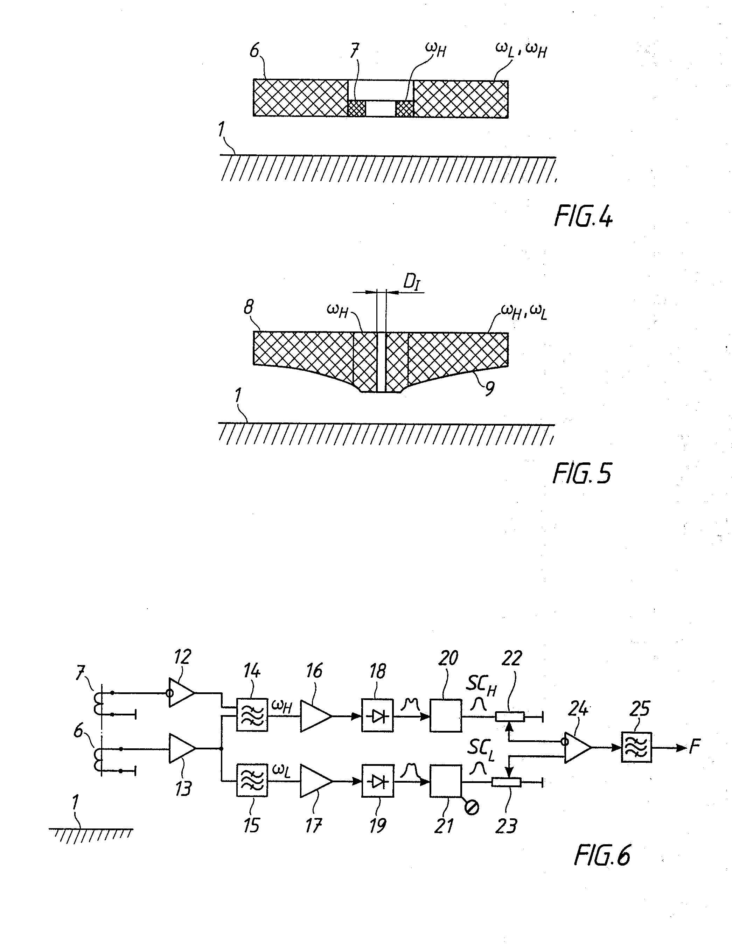

In eddy current testing, magnetic fields of a relatively high frequency are used, which may, for example, be generated by supplying a coil/winding from a so-called constant current generator with current of different carrier frequency contents. In this way, the same coil may act both as primary coil and secondary coil or - where desired - as transducer and sensor at the same time. Figures 4 and 5 may therefore, for the sake of simplicity, be regarded as a transducer/sensor with a common primary and secondary winding. Thus, the current supply and the sensing can take place via the same connection, if this is desired. The current generators, for sake of simplicity, have been omitted.

Figure 4 shows a transducer/sensor comprising coils of varying sizes and shapes. These coils are also included in Figure 6. The larger coil 6 is sensed with respect to both the carrier frequencies, i.e. $\omega_L$ and $\omega_H$, whereas the smaller coil 7 is only sensed with respect to the high frequency $\omega_H$, which is also clear from Figure 6. The SC-function from the larger coil 6 may then, for example, have the appearance as illustrated in Figure 3. However, by subtracting from curve 5 in Figure 3 the contribution obtained from the smaller coil 7, placed at the centre of the transducer, the dip of curve 5 can be reduced and hence be made equivalent to that of curve 4. In this way the difference D can be compensated to obtain an optimum resultant SC-functions.

Because of the fact that the smaller coil 7 has smaller dimensions, for example - as in this case - a smaller diameter, its SC-function (curve 55 in Figure 3) will have a more limited extension than that of the larger coil 6. It is easily realized that its dimension can be adapted so as to become optimal with respect to the difference that it is to compensate away.

Figure 5 shows a similar transducer/sensor, in which the same coil 8 is fed, for example, from a constant current generator, containing the carrier frequencies $\omega_H$ and $\omega_L$, at one point and with only $\omega_H$ at another point. In this way, with an equivalent reasoning, largely the same result can be obtained as with the transducer/sensor in Figure 4.

In principle, it is possible to design transducer/sensors comprising an unlimited number of coils/windings of, for example, different shapes and dimensions, and to allow these to cooperate so that SC-functions are generated which are suited for suppression of an arbitrary type of surface deformation. It will then be possible to combine parallel or series-connected channels in which, for example, the task of each respective channel is to suppress its special surface deformation.

In the same way as surface deformations can be suppressed, SC-functions can be created with emphasize changes in the surface, for example cracks. Such "Tailoring" of a transducer for detection of a certain type of defect can be regarded as the inverse application of the invention.

Figure 6 shows a simplified block diagram of an embodiment of a crack detection circuit. The transducer/sensor comprises two windings 6,7. The signals from these are amplified in the amplifiers 12 and 13 and are then filtered in the BP-filter 14 with respect to the high frequency and in the BP-filter 15 with respect to the low frequency. Since signals from coil 7 are only supplied to filter 14, the coil 7 only provides a contribution to the high frequency signal, which means SCC of that part of, for example, the billet surface which is covered by the coil 7, or better still, that part of the transducer/sensor 7 which is comprised/covered by the coil 7. The output signals from filters 14 and 15 are further amplified in amplifiers 16 and 17

-11-

and are then rectified in the phase-sensitive rectifiers 18 and 19. In case the above-mentioned SCC is not sufficiently efficient, it may be justified to perform an additional SCC of the rectified signals, which is done electronically in the blocks 20 and 21. This, in certain cases sophisticated, signal processing may comprise, for example, filtering, adjustable signal delay, pulse shaping and so on, and results in the finally SCC-compensated SC-functions $SC_H$ and $SC_L$, respectively, which constitute input signals to the subsequent transformation blocks 22,23 and 24. As will be clear from the above, the original SC-functions have been compensated for both via the transducer/sensor embodiment and via the signal processing. The amplitude of the SC-functions is suitably adapted to, for example, the current transformation setting. If, for example, the transformation is chosen for optimum LO-suppression, a suitable SC-amplitude is chosen among the functions, starting from the current transformation setting. The filter 25 finally filters out the current fault signal F, representing, for example, the crack on the billet surface.

Since the SCC is carried out _prior to_ the vector transformation, the surface deformations occurring do not, of course, influence the crack detection.

By SENSITIVITY CHARACTERISTIC (SC) is meant the - e.g. normative - sensitivity function/curve which is obtained upon the passage of the transducer/sensor over the current surface deformation/surface defect. The SC refers to a certain carrier frequency or complex of carrier frequencies, and to a certain surface deformation, and in some cases also to a suitable LO-distance.

By SENSITIVITY CHARACTERISTIC COMPENSATION (SCC) is meant that the difference (D) and/or differences between different original SC-functions is/are completely or partially compensated/balanced.

By CARRIER FREQUENCY is meant the frequency of that current which generates a magnetic field, in other words, the frequency of the transducer current.

By TRANSFORMATION and VECTOR TRANSFORMATION is meant, for example, vector transformation as described, for example, by US-A-4,303,885, SE-B-7507857-5, SE-B-8400698-0 and others.

By TEST OBJECT are meant, for example, hot billets, sheets, tubes, sections, etc.

By LO-DISTANCE is meant the lift-off, i.e. the distance between the transducer/sensor and the surface of the test object.

Otherwise, it can be pointed out that the terminology and the definitions which are employed in this description in all essentials correspond to those employed in the above-mentioned Swedish patents and patent applications.

By TRANSDUCER are meant all types of transducers and/or sensors operating with or being otherwise sensitive to magnetic fields. The term transducer can, for example, include everything from a simple loop to complicated coil arrangements of a three-dimensional nature.

A surface deformation, for example oscm 3, normally differs from the crack S by having a greater width (W) than the crack.

In the case of rotary symmetrical transducer embodiments it is simple, for natural reasons, to perform an SCC on the transducer in all directions of movement, which means that the transducer may have an arbitrary direction of movement with a retained SCC.

The invention can be varied in many ways within the scope of the following claims.

1. Device utilizing eddy current technique for measuring and/or supervision of test objects, such as billets, with respect to surface defects, for example surface cracks, comprising at least one transducer/sensor, for example a surface transducer and/or a surface transducer arrangement, which moves on/over the surface of the test object or a part of said surface, c h a r a c t e r i z e d  in that to suppress, completely or partially, harmless surface deformations, such as oscillation marks, the device is compensated for the sensitivity characteristic, in the direction of movement of the transducer/sensor, with respect to the surface deformation.

2. Device according to Claim 1, c h a r a c t e r i z e d in that the sensitivity characteristic compensation is obtained, completely or partially, by differently processing, for example amplifying, carrier frequency signals from at least two completely or partially separate parts of the transducer/sensor.

3. Device according to Claim 1 or 2, c h a r a c t e r i z- e d  in that the sensitivity characteristic compensation is obtained, completely or partially, by supplying completely or partially separate parts of the transducer/sensor, for example having different surface coverage, with current of different carrier frequency contents and/or carrier frequency intensity.

4. Device according to any of the preceding Claims, c h a- r a c t e r i z e d  in that at least one transducer/sensor comprises or consists of at least two coils/windings (6,7) of different dimensions and/or shapes.

5. Device according to any of the preceding Claims, c h a- r a c t e r i z e d  in that signals originating from completely or partially different carrier frequencies, for example rectified carrier frequency signals, are signal pro-

-14-

cessed, for example shaped, prior to transformation to obtain improved sensitivity characteristic compensation.

6. Device according to any of the preceding Claims, c h a r a c t e r i z e d in that a certain type of surface defect, for example cracks, is emphasized by an amplified sensitivity characteristic difference (D) for the defect in question.

FIG.1

FIG.2

FIG.3

FIG.4

FIG.5

FIG.6